# EUROPEAN PATENT SPECIFICATION

(11) **EP 0 285 917 B1**
(45) Date of publication and mention of the grant of the patent: **11.08.1993**
(21) Application number: 88104756.7
(22) Date of filing: 24.03.1988
(51) Int. Cl.: H01B 11/22

(54) **Cable for conveying electric power and for transmitting optical signals**
Elektrisches Energiekabel mit Übertragung optischer Signale
Câble pour transport de l'énergie électrique et pour la transmission de signaux optiques

(30) Priority: 31.03.1987 IT 1990587
(43) Date of publication of application: 12.10.1988
(73) Proprietor: PIRELLI CAVI S.p.A., 20123 Milano (IT)
(72) Inventor: Dotti, Enrico, Milan (IT); Grasso, Giorgio, Monza (MI) (IT); Lanfranconi, Gianmario, Trezzo Sull'Adda (MI) (IT)
(74) Representative: Giannesi, Pier Giovanni

(56) References cited:
- EP-A- 0 123 216
- EP-A- 0 203 249
- EP-A- 0 203 538
- GB-A- 1 572 299
- "Underground Power Cables", King & Hafter, publ. Longmann, 1982

## Description

The present invention relates to a cable for conveying electric power which comprises optical fibers intended to transmit optical signals.

Owing to the ever increasing development of the telecommunication means making use of optical fibers, the possibility of introducing the latter in electric cables becomes more and more useful in order to achieve - by a single cable and only one laying operation - the double effect of conveying electric power and of transmitting optical signals.

Hanging electric cables incorporating optical fibers, as for instance that described in the French Patent No.2 239 742, are already known.

In said cables the optical fibers are encased in the cable central portion.

Obviously, it would be very convenient to carry out the transmission of optical signals also by means of other types of cables for conveying electric power, as for instance sea or earth cables, but in such cases the conventional solution shows some disadvantages as for example in the case of the cable described in EP-A-0203249.

In fact, it involves the use of a duct in the cable central portion, with a consequent increase in the cable diameter.

This leads to a more difficult handling of the cable and to an increase in its production cost since, insulations and protections remaining unchanged, a greater amount of material is required.

Other cables, for example those described in EP-A-0123216 and EP-A-0203538, possesses optical fibers and electrical conductors, but the transmission of electric power is not provided and is not considered with these cables due to their structured.

Therefore, the present invention aims at eliminating the above indicated drawbacks and at providing a cable, able to convey electric power and to transmit optical signals, which maintains good characteristics of handling and has a production cost substantially equal to that of the cables used only to convey electric power.

Accordingly, the subject matter of the present invention is a submarine cable for conveying electric power and for transmitting optical signals which comprises an optical fibre at least an electric conductor, an insulation surrounding the radially outermost surface of any conductors in the cable, a cable metal sheath adjacent to the radially outermost surface of the insulation, an outer protective layer adjacent to the radially outermost surface of the cable metal sheath and an external armour surrounding the outer protective layer, said cable being characterized by the outer protective layer being constituted by a radially inner extruded first layer and a radially outer second layer formed of tape windings, at least a tube, loosely lodging at least one of said optical fibers, being embedded in said second layer, said second layer having a thickness in the range of 2 to 4 times the size (d), along a cable radius, of said tube, the value of the thickness of the second layer being such as to prevent the tube from beeing squeezed by the external armor during the cable laying and to maintain the compactness of said external armor.

Further aims and advantages of the present invention will be more evident from the following detailed description and from the attached drawings, given only by way of non restrictive example, in which:
- figure 1: represents a cross section of a cable according to a preferred embodiment of the invention, and
- figure 2: illustrates in cross section, partially broken away, a particular of figure 1.

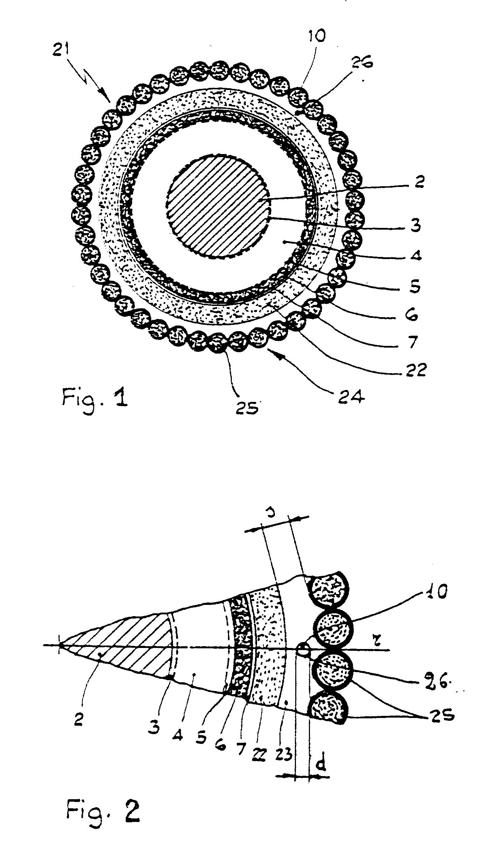

With reference to figures 1 and 2, a cable 21 comprises a central conductor 2, a first semi-conductive layer 3, an insulating layer 4, a second semi-conductive layer 5, a metal sheath 6 and a possible reinforcing layer 7.

The cable 21, shown in figures 1 and 2 is further provided, on its sheath 6 or on the possible reinforcing layer 7, with a first protective extruded layer 22 for example made of polyethylene, a second protective layer 23 having a thickness "s", made of tape windings for example of jute tape, and an external metal armour 24 formed by a plurality of resistant wires 25.

In this cable, having an external armour, a longitudinal recess or tube, loosely lodgind one or more optical fibers, is obtained in the second protective layer 23 as indicated in figure 2.

A plurality of longitudinal recesses or tubes may be arranged along the same circumference of the cable section.

In a further preferred embodiment the longitudinal recess or tube is a tube 26 of stainless steel having a diameter "d" which is inserted in the jute protective layer 23.

In the latter solution there is however the problem to size correctly the diameter "d" of the tube 26 of stainless steel with respect to the thickness "s" of the jute layer 23.

In fact, if the thickness "s" of the jute layer 23 were equal to or slightly greater than, the diameter "d" of tube 26, the latter, together with the optical fibers therein contained, would be surely damaged during the cable laying operations.

In fact, it is known that during these operations, the submarine cables are subjected to very strong axial and longitudinal stresses.

The wires 25 of the external armour 24, subjected to tension, tend to deviate towards the cable inside and might squeeze the tube 26 or anyhow transmit to it prejudicial stresses.

If, to avoid this danger, the thickness "s" of the jute layer 23 were increased till to be made much greater than the diameter "d" of the tube 26, the jute layer would become too soft and, during the cable laying operations, some wires 25 of the external armour 24 would be displaced with respect to the others, disarranging said armour and permanently damaging the cable.

It has been found that the optimum sizing, which in all the conditions of use of the cable ensures the compactness of the armour and at the same time does not damage the tube 26 and the optical fibers therein contained, is that in which the thickness "s" of the jute layer 23 ranges between 3 and 4 times the diameter "d" of the tube 26.

The external armour 24 may be formed by rods, straps or keystone shaped wires, and no limitation exists as to the position of tube 26. Said tube, or the analogous tubes lying on the same circumference of the cable section, may be positioned on any cable radius and may extend longitudinally to the cable with a rectilinear or helical (close or open helix) path and at a pitch which may be different from that of the helicoid along which are wound up the rods, straps or keystone shaped wires of the external armour 24.

In a preferred solution, when said armour is formed by rods 25, the tube 26 has its diameter lying on a radius of the cable which passes through the tangent point between two rods 25.

Moreover, the tube 26 extends longitudinally to the cable with a helical path and at a pitch substantially equal to the pitch of the helicoid of the rods 25. This happens because the compression stress exerted by rods 25 on the jute layer 23 is maximum along the generatrices of tangency between said rods and said layer and is minimum in the area of tangency between two adjacent rods 25, namely along the cable radiuses passing through the tangent points of said adjacent rods 25.

By means of this preferred solution, the thickness of the jute layer 23 can be further reduced, bringing it to 2 - 3 times the diameter of the tube 26.

The invention is described only in respect of one tube, made of stainless steel, having circular section, but it is understood that two or more tubes can be provided, equally spaced from one another to form a circle ring in the outer protective layer, that the tubes may have any whichever section, as circular, elliptic and so on, and that the tubes may also be made of plastic material or of any metal alloy resistant to corrosion and having a Young's modulus E not lower than 186,4 x 10⁹ Pa (19,000 Kg/mm²) and a yield elastic limit of 0.8.

From the above description it is clear that the longitudinal recesses containing the optical fibers are obtained in the protective layers already present in the cables used only to convey electric power, so that cables conveying electric power and transmitting optical signals are achieved, having substantially the same diameter of those used only for conveying electric power.

Consequently, the cables used to convey electric power and to transmit optical signals in accordance with the present invention are easy to handle and have substantially the same production costs as the cables intended only to convey electric power.

It is evident that further alternative embodiments of the cables described by way of example can be carried out by the scientists skilled in this field without anyhow departing from the scope of the inventive idea.

## Claims

1. A submarine cable (21) for conveying electric power and for transmitting optical signals which comprises an optical fibre (10) at least an electric conductor (2), an insulation (4) surrounding the radially outermost surface of any conductors (2) in the cable, a cable metal sheath (6) adjacent to the radially outermost surface of the insulation, an outer protective layer (22, 23) adjacent to the radially outermost surface of the cable metal sheath and an external armour (24) surrounding the outer protective layer, said cable (21) being characterized by the outer protective layer being constituted by a radially inner extruded first layer (22) and a radially outer second layer (23) formed of tape windings, at least a tube (26), loosely lodging at least one of said optical fibers, being embedded in said second layer (23), said second layer having a thickness in the range of 2 to 4 times the size (d), along a cable radius, of said tube (26), the value of the thickness of the second layer being such as to prevent the tube from being squeezed by the external armor during the cable laying and to maintain the compactness of said external armor.

2. A submarine cable as in claim 1, characterized in that the tapes, of which said radially outer second layer is made, are jute tapes, the thickness of this second layer made by jute tapes ranging between 2 and 3 times the size (d), along a cable radius, of said tube (26).

3. A submarine cable as in claim 1, characterized in that said tube (26) is made of stainless steel.

4. A submarine cable as in claim 1, characterized in that said tube (26) is made of plastic material.

5. A submarine cable as in claim 1, characterized in that said tube (26) is made of a metal alloy having a Young's modulus of elasticity not lower than 186,4 x 10⁹ Pa (19,000 Kg/mm²) and a yield elastic limit of 0.8.

6. A submarine cable as in claim 1, characterized in that the external armour (24) is formed of at least a circular ring of mechanically resistant elongated elements having circular section (25).

7. A submarine cable as in claim 1, characterized in that the external armour (24) is formed of at least a circular ring of mechanically resistant elongated elements, whose section is shaped as a strap or a keystone.

8. A submarine cable as in claim 1, characterized in that the tube (26) is so positioned that one of its transversal axes lies substantially on a radius of the cable passing through the common tangent point of two adjacent ones of said mechanically resistant elongated elements having circular section (25).

9. A submarine cable as in claim 1, characterized in that the tube (26) develops helically along the cable at a pitch which is substantially equal to the pitch of the helicoid described by said mechanically resistant elongated elements having circular section (25).

## Patentansprüche

1. Unterwasserkabel (21) zum Transportieren von elektrischer Energie und zum Übertragen optischer Signale, umfassend eine optische Faser (10), wenigstens einen elektrischen Leiter (2), eine Isolierung (4), welche die radial äußerste Fläche irgendwelcher Leiter (2) in dem Kabel umgibt, einen metallenen Kabelmantel (6) nahe der radial äußersten Fläche der Isolierung, eine äußere Schutzlage (22,23) neben der radial äußersten Fläche des metallenen Kabelmantels, und eine äußere Bewehrung (24), welche die äußere Schutzlage umgibt, wobei das Kabel (21) dadurch gekennzeichnet ist, daß die äußere Schutzlage dargestellt ist durch eine radial innere extrudierte erste Lage (22) und eine radial äußere zweite Lage (23), die aus Bandwindungen gebildet ist, wenigstens ein Rohr oder ein Schlauch (26), das bzw. der wenigstens eine der optischen Fasern lose aufnimmt, in die zweite Lage (23) eingebettet ist, wobei die zweite Lage eine Dicke im Bereich des 2-fachen bis 4-fachen der Abmessung (d) des Rohres oder Schlauches (26) entlang eines Kabelradius hat, und die Dicke der zweiten Lage derart ist, daß verhindert wird, daß das Rohr oder der Schlauch während der Verlegung des Kabels durch die äußere Bewehrung zusammengedrückt wird und daß die Kompaktheit der äußeren Bewehrung aufrechterhalten wird.

2. Unterwasserkabel nach Anspruch 1, dadurch gekennzeichnet, daß die Bänder, aus denen die radial äußere zweite Lage gebildet ist, Jutebänder sind, und die Dicke der zweiten Lage gebildet ist durch Jutebänder im Bereich zwischen dem 2-fachen und dem 3-fachen der Abmessung (d) des Rohres oder Schlauches (26) entlang eines Kabelradius.

3. Unterwasserkabel nach Anspruch 1, dadurch gekennzeichnet, daß das Rohr oder der Schlauch (26) aus rostfreiem Stahl gebildet ist.

4. Unterwasserkabel nach Anspruch 1, dadurch gekennzeichnet, daß das Rohr oder der Schlauch (26) aus Kunststoffmaterial gebildet ist.

5. Unterwasserkabel nach Anspruch 1, dadurch gekennzeichnet, daß das Rohr oder der Schlauch (26) aus einer Metalllegierung gebildet ist, die einen Young'schen Elastizitätsmodul von nicht kleiner als 186,4x10⁹Pa (19.000 Kg/mm²) und eine Grenze des elastischen Nachgebens von 0,8 hat.

6. Unterwasserkabel nach Anspruch 1, dadurch gekennzeichnet, daß die äußere Bewehrung (24) aus wenigstens einem Kreisring aus mechanisch widerstandsfähigen langgestreckten Elementen (25) gebildet ist, die kreisförmigen Querschnitt haben.

7. Unterwasserkabel nach Anspruch 1, dadurch gekennzeichnet, daß die äußere Bewehrung (24) aus wenigstens einem Kreisring aus mechanisch widerstandsfähigen langgestreckten Elementen gebildet ist, deren Querschnitt als ein Streifen oder ein Keilstein gestaltet ist.

8. Unterwasserkabel nach Anspruch 1, dadurch gekennzeichnet, daß das Rohr oder der Schlauch (26) derart positioniert ist, daß eine seiner Querachsen im wesentlichen auf einem Radius des Kabels liegt, der durch den gemeinsamen Tangentenpunkt zweier benachbarter Elemente der mechanisch widerstandsfähigen langgestreckten Elemente (25) hindurchgeht, die kreisförmigen Querschnitt haben.

9. Unterwasserkabel nach Anspruch 1, dadurch gekennzeichnet, daß das Rohr oder der Schlauch (26) sich entlang des Kabels schraubenlinienförmig mit einer Steigung erstreckt, die im wesentlichen gleich der Steigung der Wendel ist, die von den mechanisch widerstandsfähigen langgestreckten Elementen (25) mit kreisförmigem Querschnitt beschrieben ist.

## Revendications

1. Un câble sous-marin (21) de transport d'énergie électrique et de transmission de signaux optiques qui comprend une fibre optique (10), au moins un conducteur électrique (2), un isolant (4) entourant la surface radialement extérieure du ou des conducteurs (2) du câble, une gaine métallique de câble (6) adjacente à la surface radialement extérieure de l'isolant, une couche protectrice extérieure (22, 23), adjacente à la surface radialement extérieure de la gaine métallique de câble et un blindage extérieur (24) entourant la couche protectrice extérieure, ledit câble (21) étant caractérisé en ce que la couche protectrice extérieure est constituée par une première couche extrudée radialement intérieure (22) et par une deuxième couche radialement extérieure (23) formée d'enroulements de rubans, au moins un tube (26), logeant de façon lâche au moins l'une desdites fibres optiques, étant noyé dans ladite deuxième couche (23) l'épaisseur de ladite deuxième couche étant dans la plage de 2 à 4 fois la dimension (d), le long d'un rayon de câble, dudit tube (26), la valeur de l'épaisseur de la deuxième couche étant apte à empêcher le tube d'être pressé par le blindage extérieur pendant la pose du câble et à maintenir la compacité dudit blindage extérieur.

2. Un câble sous-marin selon la revendication 1, caractérisé en ce que les rubans dont est constituée ladite deuxième couche radialement extérieure sont des rubans en jute, l'épaisseur de ladite deuxième couche en rubans en jute étant comprise entre 2 et 3 fois la dimension (d) dudit tube (26) le long d'un rayon du câble.

3. Un câble sous-marin selon la revendication 1, caractérisé en ce que ledit tube (26) est en acier inoxydable.

4. Un câble sous-marin selon la revendication 1, caractérisé en ce que ledit tube (26) est en matière plastique.

5. Un câble sous-marin selon la revendication 1, caractérisé en ce que ledit tube (26) est en un alliage métallique dont le module d'élasticité de Young n'est pas inférieur à 186,4 x 10⁹ Pa (19000 Kg/mm²) et dont la limite élastique est de 0,8.

6. Un câble sous-marin selon la revendication 1, caractérisé en ce que le blindage extérieur (24) est formé d'au moins une bague circulaire en éléments allongés mécaniquement résistants à sections circulaires 25.

7. Un câble sous-marin selon la revendication 1, caractérisé en ce que le blindage extérieur (24) est formé d'au moins une bague circulaire d'éléments allongés mécaniquement résistants dont la section transversale est en forme de sangle ou de voussoir.

8. Un câble sous-marin selon la revendication 1, caractérisé en ce que le tube (26) est positionné d'une manière telle que l'un de ses axes transversaux coïncide sensiblement avec un rayon du câble passant par le point de tangence commun de deux éléments allongés mécaniquement résistants adjacents à sections transversales circulaires (25).

9. Un câble sous-marin selon la revendication 1, caractérisé en ce que le tube (26) se développe en hélice le long du câble selon un pas qui est sensiblement égal au pas de l'hélicoïde décrit par lesdits éléments allongés mécaniquement résistants à sections transversales circulaires (25).
